# EUROPÄISCHE PATENTANMELDUNG

(11) **EP 0 624 023 A2**
(43) Veröffentlichungstag der Anmeldung: **09.11.1994**
(21) Anmeldenummer: 94106279.6
(22) Anmeldetag: 22.04.1994
(51) Int. Cl.: H04M 15/30, H04M 1/56, H04M 1/02

(54) **Vorrichtung zum Erfassen insbesondere der Gebühreneinheiten von Telefongesprächen zur Kontrolle der Gebührenabrechnung**

(30) Priorität: 06.05.1993 DE 4314954
(71) Anmelder: Stewing Nachrichtentechnik GmbH & Co. KG Berlin, D-13599 Berlin (DE)
(72) Erfinder: Ostermann, Bernd, D-12207 Berlin (DE)
(74) Vertreter: Honke, Manfred, Dr.-Ing.

(57) **Zusammenfassung**

Es handelt sich um eine Vorrichtung zum Erfassen der Gebühreneinheiten von Telefongesprächen, die einen Gebührenmonitor zum Einschleifen in die Anschlußleitung eines Telefonapparates aufweist. Der Gebührenmonitor besitzt einen Mikroprozessor zum Mitlesen der angewählten Telefonnummer und zum Erfassen der Gesprächsdauer. Ferner ist ein Datenspeicher mit einem Rechner zum Erfassen des anzuwendenden Gebührensatzes und zur Ermittlung der Gebühreneinheiten über die Gesprächsdauer vorgesehen. Ein Anzeigefeld läßt die ermittelten Gebühreneinheiten und die daraus resultierenden Telefongebühren erkennen.

## Beschreibung

Die Erfindung betrifft eine Vorrichtung zum Erfassen insbesondere der Gebühreneinheiten von Telefongesprächen zur Kontrolle der Gebührenabrechnung.

Unter den Kunden der DBP Telekom verstärkt sich der Wunsch nach einer einfachen Kontrolle der Gebühreneinheiten in erheblichem Umfang. Die momentane Situation wird von vielen Telefonkunden als unbefriedigend empfunden: Die Telefonrechnung der Telekom enthält lediglich die Gesamtsumme der aufgelaufenen Gebühren aus dem angegebenen Ablesezeitraum. Aufgrund der deutschen Datenschutzbestimmungen wurde eine detaillierte Übersicht - gerufene Nummern, Gesprächsdauer, Datum und zugehörige Gebühreneinheiten - bisher nicht angeboten. Die Interessengrundlage der Telefonanwender ist jedoch noch komplexer, da einige Kunden eine generelle Erfassung der Daten ablehnen würden, eine unkontrollierte Zusendung per Rechnung wegen des möglicherweise unerwünschten Einblicks Dritter aber nicht akzeptieren.

Durch den Einsatz eines Gebührenmonitors könnte hier dem Telekom-Kunden ein Mittel an die Hand gegeben werden, mit dem eine annähernde Kontrolle der Gebührenabrechnung möglich wird. Die Telekom lehnt zwar alle nicht von Ihr verplombten und unterhaltenen Gebührenzähler ab, der erste Schritt zur Kontrolle der Rechnung ist jedoch die Erfassung der eigenen Gesprächsdaten. Hiervon ausgehend kann bei Differenzen zwischen den Monitordaten und der Rechnung verstärkt das Telefonierverhalten überprüft und bei nicht erklärbaren Abweichungen eine Beschwerde bei der Telekom eingereicht werden. Ziel ist es, eine Zählvergleichseinrichtung einzuschleifen und die Unkorrektheit der Rechnungsdaten zu beweisen.

Die Erfassung der auflaufenden Gebühren ohne Unterstützung der Telekom sind mit einer Reihe von Schwierigkeiten verbunden. Ein Gebührenzähler der herkömmlichen Bauart erhält während des laufenden Gesprächs für den Teilnehmer nicht hörbare 16 kHz-Impulse zur Weiterschaltung seiner Anzeige. Diese Impulse sind ein direktes Äquivalent zu den auflaufenden Gebühreneinheiten. Das Problem bei der Erfassung der für ein Gespräch zu entrichtenden Gebühren ohne diese kostenpflichtige Impulseinrichtung der Telekom liegt in der zeit- und räumlichen Abhängigkeit: Ein Gespräch in einer Nahzone erlaubt z. Zt. 8 Minuten Verbindung pro Einheit, eine Verbindung im Weitbereich erheblich weniger. Das gilt jedoch noch zusätzlich zeitlich differenziert - z. B. bei der unterschiedlichen Bewertung des Gesprächs tagsüber oder nachts oder an Werk- oder Feiertagen.

Der nachfolgend beschriebene erfindungsgemäße Gebührenmonitor folgt zur Lösung dieses Problems der nachstehenden Funktionsweise: Ein mit einem Mikroprozessor ausgerüstetes Zusatzgerät wird durch einfaches Einschleifen in die Anschlußschnur eines Telefonapparates in die Lage versetzt, alle abgehenden Verbindungen vermittlungstechnisch auszuwerten. Während des Verbindungsaufbaus wird die vom Teilnehmer gewählte Nummer mitgelesen, bei Meldung des gerufenen Teilnehmers eine Zeitmessung begonnen und bei Ende des Gesprächs gestoppt. Durch Auswertung der gerufenen Nummer kann der von der Telekom verwendete Gebührensatz in einem Datenspeicher ermittelt und über die Gesprächsdauer die Einheitenzahl errechnet werden. Voraussetzung ist, daß ein Rechner über den anzuwendenen Tarif informiert ist. Da dieser z. B. vom Ort (Tarifzone Nahbereich) abhängig ist, und auch Gebührenanpassungen nicht unüblich sind, muß dieser Datenspeicher vom Anwender leicht an seine örtlichen Verhältnisse angepaßt, oder der jeweils "passende" Datenspeicher vom Anwender eingesetzt werden können. Besondere ohne Gebühren erreichbare Telefonanschlüsse - wie z. B. die 0130 Nummern - sind im Datenspeicher ebenfalls vermerkt und ein Anwählen einer solchen Nummer führt zu einer entsprechenden Meldung im Anzeigefeld.

Eine ermittelte Gebührenmenge wird direkt im Anzeigefeld des Monitors angezeigt und noch während des Gesprächs im "Einheitentakt" aktualisiert. Der Anwender kann so die bereits für das Gespräch verbrauchten Einheiten direkt erfassen. Als zusätzliche Funktion kann damit eine Restanzeige für noch nicht vollständig ausgenutzte Einheiten realisiert werden: Der Anwender kann damit kostenbewußter mit dem Telefon umgehen.

Darüber hinaus kann der Gebührenmonitor so ausgelegt werden, daß nicht nur die Zahl der Gebühreneinheiten gespeichert wird, sondern auch die gerufene Nummer selbst, die Uhrzeit, die Dauer und das Datum. Diese Daten könnten dann für eine bestimmte Zeit vorrätig gehalten und jederzeit abgerufen werden. Die eingehenden Daten werden bei gefülltem Speicher jeweils die ältesten Werte überschreiben, damit ist je nach Speicherausbau die Kontrolle von mehreren Telekomrechnungen möglich. Der Anwender kann die Addition der Gebühreneinheiten für bestimmte Zeiträume vorgeben - damit können die von der Rechnung bekannten Ablesezeiträume direkt verglichen werden. Um die Daten vor Mißbrauch zu schützen, kann der Anwender eine persönliche Kennung auswählen, ohne die die Werte nicht aus dem Speicher ausgelesen werden können. Mit Hilfe eines Interfaces könnten die Daten nicht nur über eine Anzeige im Gerät selbst, sondern auch mittels eines Druckers auf Papier ausgegeben oder zur weiteren Bearbeitung - z. B. für statistische Zwecke - in einen PC übertragen werden.

Spezielle Versionen des Gebührenmonitors können mit einem Modem ausgerüstet werden, so daß die Übertragung der gespeicherten Daten nicht nur direkt wie oben beschrieben vollzogen werden kann, sondern auch über das Telefonnetz hinweg von einer entfernten Stelle aus gestartet, und der Datensatz dort empfangen werden kann.

Da für das korrekte Arbeiten des Gebührenmonitors die aktuelle Zeit und das Datum entscheidend ist, kann zur Steigerung des Bedienungskomforts ein DCF77-Empfänger bzw. Zeitzeichenempfänger eingebaut werden, der das manuelle Stellen der internen Uhr überflüssig macht. Als Speichermedium für den Gebührenkatalog bietet sich eine Chip-Karte an, die bei Verteilung und Verkauf leicht handhabbar ist und die vom Anwender einfach gewechselt werden kann. Um ein "Umgehen" des Gebührenmonitors durch zeitweises Herausziehen des TAE-Steckers zu verhindern, wird im Speicher die zeitlich lückenlose Verbindung des Gerätes mit dem Wählnetz dokumentiert. Ein Zusatznutzen entsteht durch die Möglichkeit, mit Hilfe eines Auswertungsprogramms die Gebühren für bestimmte Gespräche - z. B. dienstliche Gespräche von einem privaten Apparat - auf verschiedene Additionen aufteilen zu können. Dies könnte als Nachweis für Buchhaltungen und Finanzämter etc. verwendet werden.

Im Ergebnis dient der Gebührenmonitor zur eigenständigen - d. h. ohne Verwendung von gebührenpflichtigen Telekomeinrichtungen für diese Zwecke - Ermittlung aufgelaufener Gebühreneinheiten im Telefon- oder Telefaxverkehr.

Besonderheiten dabei sind:
- Gebührenermittlung ohne 16 kHz-Impuls
- Ablegen des "Gebührenregisters" in einem Halbleiterspeicher
- Automatisches Erkennen gebührenfreier Rufnummern
- Speicher z. B. als Chip-Karte leicht tauschbar
- Gerätesteuerung durch Mikroprozessor
- Speicherung und Wiedergabe nicht nur der Gebühreneinheiten, sondern auch der angewählten Nummer, Start- und Stoppzeit und des Datums
- Datenausgabe über Anzeige, Drucker, Computerinface oder über die Telefonleitung mittels Modem
- Ausgabe durch Code schützbar
- Speicherart und -tiefe individuell einstellbar
- Zeiteinstellung durch DCF77-Empfänger steuerbar
- Anschluß durch TAE-Stecker, keine Montage
- Additionszeitraum leicht an Ablesezeitraum anpaßbar
- Restwertanzeige während des Gesprächs
- Nachweismöglichkeit für Abrechnungen
Im folgenden wird die Erfindung anhand einer lediglich ein Ausführungsbeispiel darstellenden Zeichnung näher erläutert; es zeigen:

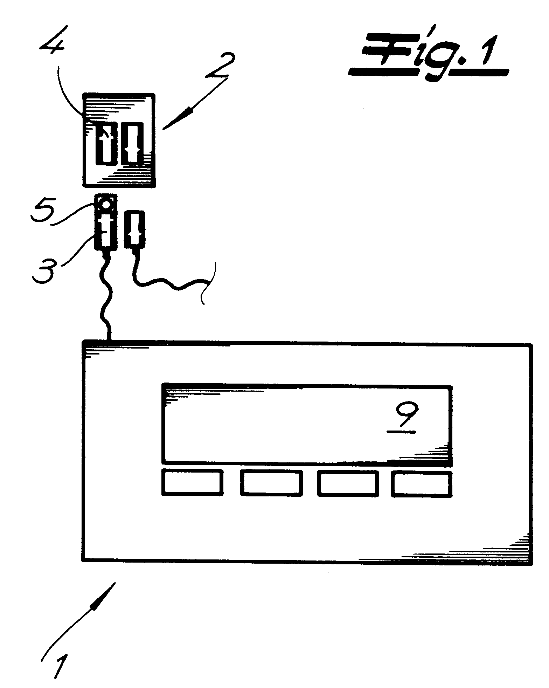

- **Fig. 1**: in schematischer Darstellung einen Gebührenmonitor mit Anschluß an das Telefonnetz und

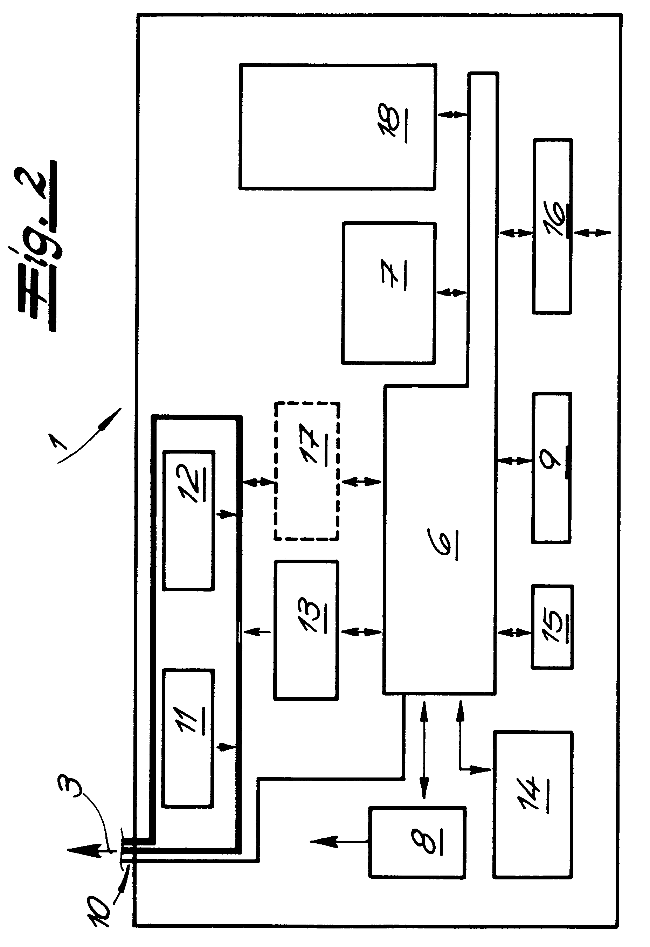

- **Fig. 2**: den Aufbau des Gebührenmonitors in schematischer Darstellung.

In den Figuren ist ein Gebührenmonitor 1 dargestellt, der zum Anschluß an ein Telefonnetz mit einer TAE-Dose 2 eingerichtet ist. Der Bereich des Netzwerkbetreibers - in Deutschland der Telekom - endet an der ersten TAE-Dose 2. Diese wird zukünftig in Deutschland als "Hoheitsdose" bezeichnet, an welche Endgeräte mit N- und F-codierten TAE-Steckern 3 angeschlossen werden können.

Sind keine Endgeräte eingesteckt, ermöglichen in der TAE-Dose 2 vorhandene Umschaltkontakte den direkten Kabelanschluß weiterer TAE-Dosen - z. B. in anderen Räumen. Deshalb muß vor allen möglichen Endgeräten eine Überwachungseinrichtung eingesteckt sein. Das ist bei dem Ausführungsbeispiel die N-codierte Buchse 4 der ersten TAE-Dose 2. Ein an diese TAE-Dose 2 angeschlossenes Endgerät befindet sich somit quasi "zwischen" der Amtsseite (hier Telekom) und der Teilnehmerseite. Eine lückenlose Dokumentation aller Teilnehmeraktivitäten kann nur bei ständig eingestecktem TAE-Stecker 3 gewährleistet werden, denn sonst würden die Kontakte in der TAE-Dose 2 diese N-codierte Buchse 4 überbrücken und damit sämtliche nachfolgenden Einrichtungen wieder direkt an das Telefonnetz legen.

Der TAE-Stecker 3 des Gebührenmonitors 1 ist deshalb mit einem Taster oder Fühler 5 ausgestattet, der betätigt wird, sobald der TAE-Stecker 3 eingesteckt ist. Durch eine geeignete Anbringung eines nicht dargestellten "Betätigers" wird sichergestellt, daß nicht bei eingestecktem TAE-Stecker 3 von der Seite z. B. mit einer Klinge oder einem ähnlichen dünnen Werkzeug der "Betätiger" zurückgehalten und der TAE-Stecker 3 unbefugt aus der TAE-Dose 2 entfernt wird. Die naheliegende, rein elektrische Prüfung, ob der TAE-Stecker 3 des Gebührenmonitors 1 eingesteckt ist oder nicht, ist nicht ausreichend aussagekräftig. Es kann betriebsbedingt zu Unterbrechungen der Spannungsversorgung oder zu einem Trennen der Zuleitungen kommen. In diesen Fällen wäre ohne Taste oder Fühler 5 unklar, ob noch eine korrekte Verbindung mit der TAE-Dose 2 besteht. - Zusätzlich ist der TAE-Stecker 3 mit einer Rastung ausgerüstet, die ein versehentliches Entfernen oder ein Herausziehen am Kabel ausschließt. Damit ist sichergestellt, daß die Trennung vom Netz - und damit die Unterbrechung der Dokumentation - nur wissentlich geschehen kann.

Der Gebührenmonitor 1 weist ein Gehäuse, z. B. Tischgehäuse mit seinen verschiedenen Baugruppen auf:

Die zentrale Steuerung - ein Mikroprozessor 6 - wertet die aus verschiedenen Überwachungseinrichtungen gewonnenen Daten aus, ermittelt über die in einem internen Datenspeicher 7 vorhandene Kostenordnung die möglichen Gebühren und rechnet den Umfang unter Hinzuziehung der von einem DCF77-Empfänger 8 erhaltenen exakten Uhrzeit aus. Die gewonnenen Daten werden im internen Datenspeicher 7 abgelegt, wahlweise über eine Anzeige 9, z. B. LCD-Anzeige nach außen getragen oder einem anderen Gerät über Schnittstellen übermittelt.

Das zu dem oben beschriebenen TAE-Stecker 3 mit integriertem Taster oder Fühler 5 gehörende Kabel 10 enthält die Leitungen der "Schleife" und die Anschlüsse des Tasters bzw. Fühlers 5 (Fühlerleitung). Für a/b-Adern sind amts- und teilnehmerseitig Überwachungseinrichtungen 11, 12 vorhanden. Zur Unterscheidung von Vorgängen auf der Amts- oder Teilnehmerseite ist die Schleife meßtechnisch getrennt. Damit wird es möglich, "außen" fremdaufgeschaltete Geräte zu erkennen und hierüber geführte Gespräche im Datenspeicher 7 entsprechend zu kennzeichnen. Auch ein einfaches "Abhören" durch Parallelschalten weiterer Apparate kann ebenso wie andere Manipulationen an der Leitung erkannt und angezeigt werden. Eine innen oder außen gewählte Rufnummer wird mittels einer Leitungsüberwachungseinrichtung 13 mit Ruftonerkennung - sowohl im IWV (Impulswählverfahren) als auch im MFV (Mehrfrequenzverfahren) - Ziffer für Ziffer mitgelesen und von dem Mikroprozessor bzw. der zentralen Steuerung 6 zwecks weiterer Verarbeitung zwischengespeichert. Nach Wählen der ersten beiden Ziffern der Rufnummer wird die Überwachung der Leitung und der Ruftöne aktiviert.

Das Hauptproblem für die korrekte Erfassung der Gebühren ist die richtige Erkennung des Gesprächbeginns. Dazu werden die einlaufenden Ruftöne analysiert - spätestens wenn sie ausbleiben ist die Verbindung aufgebaut. Alle festgestellten Aktivitäten (Tln hebt ab, Tln wählt, Tln legt auf, Außenschaltung, Ausfall der Speisung der Telekom, einlaufende Gebührenimpulse) werden von der zentralen Steuerung 6 als Datensatz zusammengefaßt und in den internen Datenspeicher 7 transferiert. Alle diese relevanten Zeitpunkte werden über den DCF77-Empfänger 8 ermittelt - vorteilhaft durch den Wegfall der Einstellung und hohe Präzision. Der interne Datenspeicher 7 wird ebenso wie das restliche System aus einem überwachten Netzteil 14 versorgt, das zur Sicherung gegen Stromausfall über Batterien oder nachladbare Akkus verfügt. - Bedienelemente 15 an der Vorderfront des Gebührenmonitors 1 erlauben die Auswahl von Betriebsarten des Gerätes, der Auswertung und der Anzeige 9. Sie bestehen aus mehreren Tasten zum "Blättern" innerhalb der auf der Anzeige 9 erscheinenden "Menüs" und einer mehrzeiligen LCD-Anzeige. Es sind mindestens vier Tasten für "Menüumschaltung", "Blättern/Auswahl vor", "Blättern/Auswahl zurück" und "Auswahl" vorhanden. Die Eingabe von Rufnummern, Datumsangaben und ähnlichem wird über die Tastatur eines angeschlossenen Telefons durchgeführt und zur Kontrolle auf der Anzeige 9 des Gebührenmonitors 1 dargestellt.

Der Gebührenmonitor 1 verfügt über eine Schnittstelle nach festgelegtem Standard (seriell V.24 oder parallel Centronics) zur Ausgabe von Daten an einen PC und/oder an einen Drucker 16. Optional ist auch ein Modem 17 zur Ausgabe von Daten über die Telefonleitung vorstellbar. Da im Streitfall jedoch ohnehin ein Sachverständiger die Montage kontrollieren muß, könnte er bei dieser Gelegenheit auch die Daten auslesen. Ein Datenverkehr per Modem 17 käme somit nur bei Zwischenabfragen entfernt untergebrachter Telefone (im gewerblichen Einsatz) zum Tragen.

Neben dem internen Datenspeicher 7 ist auch ein austauschbarer Datenspeicher 18 vorgesehen. In den beiden Datenspeichern 7, 18 des Gebührenmonitors 1 werden im internen Datenspeicher 7 die ermittelten Daten gehalten, während im auswechselbaren Datenspeicher 18 die Gebührensätze abgelegt sind. Der interne Datenspeicher 7 ist in nicht flüchtiger Technologie ausgeführt (NVRAM) oder wird durch die im Netzteil 14 enthaltenen Batterien/Akkus ständig mit Strom versorgt. Der auswechselbare Datenspeicher 18 ist von außen zugänglich und z. B. als Chipkarte oder besser als Speicherkarte realisiert; diese werden heute häufig als Ergänzung für tragbare Computer oder ähnliche Geräte eingesetzt. Die Speicherkarte 18 verfügt über einen ROM (nur Lesespeicher) - zur Wiederverwendung der Speicherkarten 18 (deren Inhalte bei Gebührenänderungen nicht mehr weiterverwendbar sind) kann der Datenspeicher 18 auch durch EPROM-Bausteine aufgebaut werden: Speicherkarten 18 würden dann im Austausch gekauft, im Werk intern gelöscht und erneut beschrieben. Denkbar wäre auch ein "Herunterladen" der Gebührensätze mittels des Modems 17 von einer zentralen Servicestelle. Dies ist für den Kunden jedoch komplizierter wie das Einstecken einer Speicherkarte 18 und wird deshalb lediglich als Möglichkeit gewertet.

Vor Anwendung des Gebührenmonitors 1 ist mittels der oben beschriebenen Bedienmöglichkeiten die eigene Telefonnummer mit Ortsnetzkennzahl einzugeben. In allen Protokollen und Ausdrucken wird diese dann automatisch vermerkt. Bei der Ermittlung der Gebühren für abgehende Gespräche ist zumindest die so erlangte Vorwahl wichtig, um zwischen Ortsgesprächen, Nahbereich und Fernwahl etc. unterscheiden zu können. Die Richtigkeit der eingegebenen Nummer wird im Ernstfall im Rahmen der allgemeinen Prüfung vom Sachverständigen kontrolliert. Durch die ständig aktive Leitungsüberwachung außen und innen wird der Beginn jedes Verbindungsaufbaus erkannt. Im Normalfall werden von der Innenseite Wählimpulse (alternativ Frequenzen) eintreffen und im Gebührenmonitor 1 mitgelesen. Bei Veränderung des Leistungszustandes (hier der Wählvorgang) wird die aktuelle Uhrzeit über die Referenzquelle DCF77-Empfänger 8 ermittelt und als Beginn einer Aktivität auf der Leitung im internen Datenspeicher 7 abgelegt. Die Wählinformation wird erfaßt und ebenfalls gespeichert. Mittels der gerufenen Nummer wird im Gebührenkatalog der Speicherkarte 18 der anzuwendende Gebührensatz ermittelt und ebenfalls im Datenspeicher 7 abgelegt. Über die ablaufende Zeit werden nun die Gesprächsdauer und die Gebühren erfaßt bzw. stetig ermittelt und zumindest die Gesprächsdauer im Datenspeicher 7 eingetragen. Alle diese Eintragungen werden zu einem, nur dieses Gespräch betreffenden Datensatz zusammengefaßt. Zusätzlich werden allgemeine Speicherplätze (Zahl der Gespräche/Gebühreneinheiten insgesamt etc.) ständig aktualisiert und entsprechende Werte - bei vorheriger Auswahl - auf der Anzeige 9 dargestellt. Ein allgemeiner Datensatz bezieht sich auch auf das Ein- und Aufstecken des TAE-Steckers 3 in die TAE-Dose 2. Mittels des Tasters oder Fühlers 5 kann der Gebührenmonitor 1 den Steckzustand erkennen und über Datum und Uhrzeit des Empfängers auch präzise protokollieren. Bei Beendigung des Gesprächs wird die Aufzeichnung eingestellt und der Gebührenmonitor 1 kehrt zur allgemeinen Leitungsüberwachung zurück. Alle irregulären Zustände auf der Leitung - Speisungsausfall/Fremdaufschaltung etc. werden ebenfalls in Datensätze gebündelt und im Datenspeicher 7 abgelegt. Der interne Datenspeicher 7 wird durch die Gesprächsdatensätze zyklisch gefüllt - die ältesten Daten werden nach dem ersten Umlauf als erste überschrieben. Die Speichergröße ist ausreichend für eine mehrmonatige Speicherung. Damit lassen sich die üblichen Abrechnungszeiträume der Telefonrechnungen überbrücken. Die hierfür notwendigen Einstellungen bestimmter Start- und Endtermine für einen "Summenzähler" lassen sich durch die Bedienelemente 15 (eventuell inklusiv der Telefontastatur) durchführen.

Die Baugruppe "Leitungsüberwachung" erkennt auch die 16 kHz-Impulse der Telekom - soweit für diesen Anschluß erzeugt - und prüft die über die Imulse ermittelten Gebühren gegen die eigenen errechneten Gebühren. Bei Abweichung wird die Anwender während des Gesprächs bereits auf die Differenz hingewiesen. Ein besonderes Augenmerk sollte nun auf die folgende Rechnung gerichtet werden. Im Datensatz wird die Zahl der 16 kHz-Impulse ebenfalls vermerkt. Eine sofortige Anzeige erfolgt bei Fremdaufschaltungen - hier besteht die Gefahr des Mithörens von Gesprächen.

Wird beim Vergleich mit der Rechnung eine Diskrepanz festgestellt, kann durch Bedienhandlungen die Aufzeichnung vollständig eingestellt, oder nur der betroffene bestimmte Bereich gegen das zyklische Überschreiben geschützt werden. Nach Auswertung durch einen Sachverständigen kann dann wieder zur Standardbetriebsweise zurückgekehrt werden.

Zur Erhöhung der Datensicherheit kann neben der persönlichen Kennung für die Ausleseberechtigung auch der gesamte Speicherinhalt verschlüsselt werden. Alle Einträge wären dann verschlüsselt und nur durch die zentrale Steuerung 6 wieder zu entschlüsseln. Dem Argument der möglichen Manipulierbarkeit des Speicherinhaltes könnte damit zusätzlich entgegengewirkt werden. Um den Zugang zu allen Bauteilen des Gebührenmonitors 1 zu erschweren, ist das Gehäuse versiegelt oder durch den gewählten Aufbau nach Verlassen des Werkes nicht ohne teilweise Zerstörung wieder zu öffnen. Die Unversehrtheit der Plombe(n) oder des Gehäuses ist im Ernstfall durch den Sachverständigen zu prüfen.

### Ausland:

Für Anwendungen im Ausland ist an Stelle der Verwendung eines TAE-Steckers 3 eine länderspezifische Lösung notwendig. Das erfindungsgemäße Prinzip ist jedoch ohne Probleme auch auf die stark verbreitete Western-Technik übertragbar - lediglich die Steckerform ist anders.

Die Art des Gebührenimpulses ist ebenfalls unterschiedlich - jedoch ist auch hier das erfindungsgemäße Prinzip ähnlich.

## Patentansprüche

1. Vorrichtung zum Erfassen insbesondere der Gebühreneinheiten von Telefongesprächen zur Kontrolle der Gebührenabrechnung, **gekennzeichnet durch** einen Gebührenmonitor (1) zum Einschleifen in die Anschlußleitung, z. B. Anschlußschnur, eines Telefonapparates,
- mit einem Mikroprozessor (6) als zentrale Steuerung zum Mitlesen der von dem anrufenden Teilnehmer angewählten Telefonnummer und zum Erfassen der Gesprächsdauer,
- mit einem Rechner und Datenspeichern (7, 18) zum Auswerten der angewählten Telefonnummer hinsichtlich des anzuwendenden Gebührensatzes und zur Ermittlung der Anzahlung der Gebühreneinheiten über die Gesprächsdauer,
- mit einer Anzeige (9) zum Anzeigen der ermittelten Gebühreneinheiten und der daraus resultierenden Telefongebühren,
wobei der eine Datenspeicher (7) jeweils die angewählte Telefonnummer, das Datum, die Uhrzeit, die Gesprächsdauer und die verbrauchten Gebühreneinheiten speichert und in dem anderen Datenspeicher (18) die Gebührensätze abgelegt sind.

2. Vorrichtung nach Anspruch 1, dadurch gekennzeichnet, daß der Gebührenmonitor (1) mit einem Modem (17) ausgerüstet ist.

3. Vorrichtung nach Anspruch 1 oder 2, dadurch gekennzeichnet, daß in den Gebührenmonitor (1) ein DCF77-Empfänger (8) eingebaut ist.

4. Vorrichtung nach einem der Ansprüche 1 bis 3, dadurch gekennzeichnet, daß der Gebührenmonitor (1) einen TAE-Stecker (3) aufweist.

5. Vorrichtung nach einem der Ansprüche 1 bis 4, dadurch gekennzeichnet, daß der TAE-Stecker (3) einen Taster oder Fühler (5) aufweist.

6. Vorrichtung nach einem der Ansprüche 1 bis 5, dadurch gekennzeichnet, daß der andere Datenspeicher (18) austauschbar und von dem Teilnehmer in den Gebührenmonitor (1) einsetzbar ist.

7. Vorrichtung nach einem der Ansprüche 1 bis 6, dadurch gekennzeichnet, daß der austauschbare Datenspeicher (18) als Halbleiterspeicher, z. B. Chip-Karte oder Speicherkarte ausgeführt ist.

8. Vorrichtung nach einem der Ansprüche 1 bis 7, dadurch gekennzeichnet, daß der interne Datenspeicher (7) über eine Kennung bedienbar ist.

9. Vorrichtung nach einem der Ansprüche 1 bis 8, dadurch gekennzeichnet, daß der interne Datenspeicher (7) einen Codierer/Decodierer für die Dateneingabe und -ausgabe aufweist.

10. Vorrichtung nach einem der Ansprüche 1 bis 9, dadurch gekennzeichnet, daß an den internen Datenspeicher (7) ein Drucker, PC oder dergleichen Endgerät über ein Interface anschließbar sind.
